# EUROPÄISCHE PATENTSCHRIFT

(11) **EP 3 559 738 B1**
(45) Veröffentlichungstag und Bekanntmachung des Hinweises auf die Patenterteilung: **05.03.2025**
(21) Anmeldenummer: 17835925.3
(22) Anmeldetag: 20.12.2017
(51) Int. Cl.: G03B 7/091, G03B 17/00

(54) **MESS- UND/ODER SENSORVORRICHTUNG MIT EINER KAMERA**
MEASUREMENT AND/OR SENSOR DEVICE COMPRISING A CAMERA
DISPOSITIF DE MESURE ET/OU DE DÉTECTION ÉQUIPÉ D'UNE CAMÉRA

(30) Priorität: 23.12.2016 DE 102016125646
(43) Veröffentlichungstag der Anmeldung: 30.10.2019
(73) Patentinhaber: WIPOTEC GmbH, 67657 Kaiserslautern (DE)
(72) Erfinder: ZINKE, Bernd, 66399 Mandelbachtal (DE); SCHULZ, Stefan, 67661 Kaiserslautern (DE); ELSPAß, René, 67722 Winnweiler (DE)
(74) Vertreter: Eder Schieschke & Partner mbB
(86) Internationale Anmeldenummer: PCT/DE2017/101096
(87) Internationale Veröffentlichungsnummer: WO 2018/113849

(56) Entgegenhaltungen:
- WO-A1-2016/049259
- WO-A2-2014/127978
- DE-A1- 4 119 371
- US-A- 5 371 691
- US-B1- 6 397 165

## Beschreibung

Die Erfindung betrifft eine Mess- und/oder Sensorvorrichtung mit einer Kamera. Derartige Mess- und/oder Sensorvorrichtungen werden in verschiedenen Bereichen der Industrie, beispielsweise in der Lebensmittelindustrie, Arzneimittelindustrie, etc., verwendet, um Produkte bzw. deren Verpackungen zu inspizieren. So werden beispielsweise Kennzeichnungen bzw. Aufdrucke, die in Form von Barcodes vorliegen, gelesen und kontrolliert, also fotografiert und analysiert.

Derartige Kameras werden aber auch zu Messzwecken, beispielsweise in der Logistikbranche, bei der Bestimmung der Dimensionen (Länge, Breite, Höhe) von Versandgütern verwendet.

Auch in der heutigen modernen Bearbeitung und Verwaltung von großen Warenströmen spielt die Qualität der Erkennung der Kennzeichnung der Produkte sowie Genauigkeit der Bestimmung von Dimensionen eine sehr große Rolle.

Beispielsweise muss eine Kennzeichnung bezüglich datentechnischer Inhalte und Layout-Formaten nach bestimmten Designregeln erstellt werden. Die so erstellten Layouts müssen mit hochwertigen Druck- bzw. Etikettier- oder Kennzeichnungssystemen auf einen Zwischenträger oder direkt auf das Produkt bzw. dessen Verpackung aufgebracht werden. Dabei ist eine exakte Positionierung und Ausrichtung der Kennzeichnung notwendig.

Am Ende des Kennzeichnungsvorgangs muss die Kennzeichnung einer Vielzahl von Anforderungen und Vorgaben entsprechen und eine hohe Qualität aufweisen. Dieses hohe Qualitätsniveau der Kennzeichnung muss aber nicht nur während der Herstellung eines Produktes vorhanden sein, sondern muss auch innerhalb der nachfolgenden Vertriebskette des Produktes erhalten bleiben, beispielsweise bis hin zum Übergabepunkt des Produkts an den Endverbraucher im Supermarkt. Anderenfalls würde ein von der elektronischen Kasse im Supermarkt nicht lesbares Etikett zum Misserfolg für die gesamte davor liegende Produktions- und Logistikkette führen und gegebenenfalls die Zurückweisung ganzer Lieferchargen nach sich ziehen.

Zur Überwachung der Qualität von Kennzeichnungen (an Produkten) werden daher an vielen Stationen im Warenfluss Kameras eingesetzt. Die Qualität der verwendeten Kameras ist daher von großer Bedeutung für die Qualität des Gesamtablaufs. Derartige Kameras werden bei ihrer Herstellung üblicherweise bestimmten Qualitätstests unterzogen. Im Laufe ihres Lebenszyklus verändern die Kameras jedoch ihre messtechnischen Eigenschaften. Dies ist beispielsweise auf eine Änderung der Eigenschaften (elektronisch, physikalisch, chemisch) des Sensor-Chips zurückzuführen. Auch die mit den Kameras zusammenwirkenden (oder sogar in diesen integrierten) Beleuchtungsmodule können ihre Eigenschaften (bezüglich der Helligkeit und Ausleuchtung) mit der Zeit ändern. Ursache hierfür kann zum Beispiel eine Alterung der verwendeten LEDs sein.

Ist die erforderliche Qualität bzw. Genauigkeit nicht mehr gegeben, müssen vorhandene Kameras gegen neue Kameras ausgetauscht werden, wodurch sich nachteiligerweise die Kosten in der Anwendung (also beispielsweise bei der Bearbeitung, Verwaltung und/oder Überwachung von großen Warenströmen) erhöhen.

Der vorliegenden Erfindung liegt daher die Aufgabe zugrunde, eine Mess- und/oder Sensorvorrichtung zu schaffen, die eine Minderung dieser Kosten in der Anwendung ermöglicht.

DE 41 19 371 A1 offenbart eine Kamera bei welcher der Zugriff auf gewisse Einstellbereiche mittels Passwort geschützt ist.

Diese Aufgabe wird erfindungsgemäß durch eine Mess- und/oder Sensorvorrichtung mit den Merkmalen des Anspruchs 1 gelöst.

Indem die erfindungsgemäße Mess- und/oder Sensorvorrichtung eine Speichereinheit aufweist, in welcher Daten zur Steuerung der Mess- und/oder Sensorvorrichtung, insbesondere der Kamera, abgelegt sind, kann eine derartige Mess- und/oder Sensorvorrichtung nicht nur kalibriert (Feststellen/Ermitteln einer Messabweichung) werden, sondern durch Änderung der Daten auch justiert bzw. nachjustiert (Reduzieren oder Beseitigen einer Messabweichung) werden.

Hierdurch kann vorteilhafterweise ein kostenintensiver Austausch durch eine neue Mess- und/oder Sensorvorrichtung, insbesondere eine neue Kamera, die den Qualitätsanforderungen genügt, vermieden werden.

Durch die Möglichkeit einer (Nach-)Justage der Mess- und/oder Sensorvorrichtung mittels Änderung der in der Speichereinheit abgelegten Daten kann die Lebensdauer der Mess- und/oder Sensorvorrichtung unter Einhaltung der Qualitätsanforderungen deutlich verlängert werden.

Um diese Daten gegen unberechtigte Änderungen zu schützen, weist die erfindungsgemäße Mess- und/oder Sensorvorrichtung zudem eine Schutzvorrichtung für die Speichereinheit auf, welche die in der Speichereinheit abgelegten Daten gegen unbefugte Veränderung schützt und auf diese Weise ebenfalls die Einhaltung der Qualitätsanforderungen gewährleistet.

Erfindungsgemäß kann die Mess- und/oder Sensorvorrichtung auch eine Beleuchtungseinrichtung umfassen, so dass es sich bei den Daten zur Steuerung der Mess- und/oder Sensorvorrichtung um Daten zur Steuerung der Kamera und/oder Beleuchtungseinrichtung handeln kann. Durch ein (Nach-)Justieren der Daten zur Steuerung der Beleuchtungseinrichtung können nicht nur (physikalische) Veränderungen der Beleuchtungseinrichtung selbst, sondern im Zusammenspiel mit der Kamera auch Veränderungen an der Kamera ausgeglichen werden.

Zudem ist es durch eine Mess- und/oder Sensorvorrichtung mit einer vorzugsweise integrierten steuerbaren Beleuchtungseinrichtung möglich, die Mess- und/oder Sensorvorrichtung, insbesondere die Kamera, unabhängiger vom Umgebungslicht auszugestalten.

Bei den in der Speichereinheit abgelegten Daten handelt es sich um Justierdaten zur Justage der Mess- und/oder Sensorvorrichtung. Als Justierdaten kommen beispielsweise Daten zur Justage der Kamera, wie Blende, Brennweite, Weißabgleich, ISO und die Belichtungszeit, Abstand zwischen Kamera und Objekt etc. und/oder Daten zur Justage einer Beleuchtungseinrichtung, wie Helligkeit, Farbe, Intensität, Lichtstärke, Zeitverhalten (gepulster Betrieb), etc., in Frage.

In einer möglichen Ausgestaltung der Erfindung ist die Schutzvorrichtung als mechanische Zugriffssperre, beispielsweise in Form eines Schalters zum Sperren oder Freigeben einer Schreibleitung der Speichereinheit, ausgebildet. In dem Betriebsmodus kann der Schalter gegen eine unbefugte Betätigung zusätzlich mit einem Schloss, einem Siegel, einer Versiegelung, einer Verplombung, etc., versehen sein, so dass ein unbefugter Schreibzugriff auf die Speichereinheit leicht und schnell durch einen Bruch des Siegels, der Verplombung oder ein beschädigtes Schloss offensichtlich wird.

Außerdem ist es möglich die Schutzvorrichtung als elektronische Zugriffssperre auszubilden. So kann die Schreibleitung (bzw. der Schreibkanal) mittels eines elektronischen Schalters (oder einer elektronischen Schaltung) im Betriebsmodus unterbrochen sein und nur bei einer speziellen Anforderung/Signal (beispielsweise mittels eines elektronischen Schlosses) freigegeben werden, um im Justiermodus einen Schreibzugriff auf die in der Speichereinheit abgelegten Daten zu ermöglichen.

Weiterhin ist es eine Möglichkeit, die Schutzvorrichtung als softwareimplementierte Zugriffssperre auszubilden. So kann ein Programmmodul, beispielsweise in einem Bildverarbeitungsrechner oder eine speicherprogrammierbare Steuerung (SPS) für den Schreibzugriff auf die Speichereinheit gegen eine unbefugte Benutzung abgesichert sein und/oder der Aufruf dieses Programmmoduls nur bei deaktivierter Schutzvorrichtung, beispielsweise bei entsprechender Authentifizierung möglich ist.

Als weitere Realisierungen von vorgenannten Ausgestaltungen einer Schutzvorrichtung kommen softwareimplementierte Lösungen, wie beispielsweise eine Überwachung und/oder ein Protokoll, wie beispielsweise Logdateien, audit trail, etc. des Datenschreibzugriffs in Frage. Auch mittels derartiger Realisierungen einer Schutzvorrichtung kann ein unbefugter Zugriff verhindert und/oder ein erfolgter unbefugter Zugriff entdeckt bzw. aufgedeckt werden. Im Falle eines Versuches eines unbefugten Zugriffs ist es selbstverständlich auch denkbar, einen Alarm (optisch, akustisch oder als Meldung) auszugeben und/oder den Betriebsmodus zeitweise oder dauerhaft zu unterbinden.

Weiterhin ist es denkbar, die Schutzvorrichtung in elektronisch- oder softwareimplementierter Verschlüsselung und/oder Authentifizierung in einem Netzwerk auszubilden.

Beispielsweise kann ein Schreibzugriff auf eine im Netzwerk befindliche Speichereinheit bzw. auf die dort abgelegte Daten durch entsprechende Verschlüsselung sowie durch authentifizierte Zuordnung abgesichert sein. Zudem ist es denkbar, auch den Lesezugriff auf eine im Netzwerk befindliche Speichereinheit mittels entsprechender Verschlüsselung sowie mittels authentifizierter Zuordnung abzusichern.

Auf diese Art ist es erfindungsgemäß selbst mit einer dezentral in einem Netzwerk (Intranet, Internet, Cloud, etc.) befindlichen Speichereinheit möglich, die dort abgelegten Daten gegen einen unbefugten Schreibzugriff und eventuell zusätzlich gegen einen unbefugten Lesezugriff zu schützen.

Zur Realisierung insbesondere der vorstehend genannten, elektronisch- und softwareimplementierten Schutzvorrichtung kann die Mess- und/oder Sensorvorrichtung eine Steuereinrichtung aufweisen, die den Zugriff auf die Speichereinheit steuert und selbst als Schutzvorrichtung ausgebildet ist.

In weiterer Ausgestaltung der Erfindung weist die Mess- und/oder Sensorvorrichtung einen Betriebsmodus auf, in welchem die Schutzvorrichtung aktiv ist. Zusätzlich zu diesem Betriebsmodus kann die Mess- und/oder Sensorvorrichtung in vorteilhafter Ausgestaltung - als wenigstens einen weiteren Modus - einen Justiermodus bzw. eine Justierfunktion aufweisen, in welchem die Schutzvorrichtung deaktiviert und Justierdaten erzeugt werden.

Ausschließlich in dem Justiermodus kann die Mess- und/oder Sensorvorrichtung, insbesondere die Kamera und/oder Beleuchtungseinrichtung, justiert werden. Hierzu wird beispielsweise mittels der Steuereinrichtung eine ansonsten gesperrte Justierfunktion freigegeben und die Kamera und/oder die Beleuchtungseinrichtung justiert. Das Sperren und Freigeben der Justierfunktion kann ebenfalls über die Schutzvorrichtung für die Speichereinheit oder über eine separat ausgebildete Schutzvorrichtung (ebenfalls Hardware- oder Softwareimplementiert) erfolgen.

In diesem Justiermodus generierte Daten, insbesondere Bilddaten, können vorteilhafterweise von im Betriebsmodus generierten Daten, insbesondere Bilddaten, unterschieden werden. Zur Unterscheidung kann bei in den im Betriebsmodus generierten Daten beispielsweise wenigstens ein entsprechendes Bit gesetzt werden und/oder wenigstens eine bestimmte (Daten-)Information fehlen. Beispielsweise können die im Betriebsmodus generierten Daten wenigstens eine der für eine Mess- und/oder Sensorvorrichtung eindeutigen Informationen, wie Seriennummer, prüfpflichtige, messtechnische Eigenschaften, Datum, Justierfaktor, Softwareversion, etc. enthalten, wohingegen in den im Prüfmodus generierten Daten eine derartige Information fehlt und/oder keine Ausgabe der Bild- oder Messdaten an den Anwender oder den Anwendungszweck erfolgt.

In diesem Justiermodus ist der hardware- und/oder softwareimplementierte Schutz der Schutzvorrichtung bzw. der Schutzvorrichtungen erkennbar aufgehoben. Bei einer hardwareimplementierten Ausgestaltung der Schutzvorrichtung kann beispielsweise durch Bruch eines entsprechenden Siegels, einer Versiegelung oder einer Verplombung der Schutz aufgehoben werden.

In dem Justiermodus bzw. mittels der Justierfunktion werden Justierdaten zur korrekten Justage der Mess- und/oder Sensorvorrichtung beispielsweise mittels einer entsprechend ausgebildeten Steuereinheit ermittelt und in der Speichereinheit abgelegt. Als Justierdaten kommen, wie vorstehend erläutert, beispielsweise Daten zur Justage der Kamera, wie Blende, Brennweite, Weißabgleich, ISO und die Belichtungszeit, Abstand zwischen Kamera und Objekt etc. und/oder Daten zur Justage der Beleuchtungseinrichtung, wie Helligkeit, Farbe, Intensität, Lichtstärke, Zeitverhalten (gepulster Betrieb), etc., in Frage.

Bei der Justage der Mess- und/oder Sensorvorrichtung können beispielsweise mittels eines Prüfnormals (eingangsseitig) und entsprechender Einstellung bzw. Änderung der Justage der Mess- und/oder Sensorvorrichtung, insbesondere der Kamera, ausgangsseitig Daten, insbesondere Bilddaten bzw. Messdaten erzeugt werden, die innerhalb einer gewünschten Toleranz liegen. Die entsprechende Einstellung der Justage werden dann als neue Justierdaten in der Speichereinheit abgelegt. Beim Verlassen des Justiermodus wird die Schutzeinrichtung wieder aktiviert, so dass die Justierdaten und/oder die Justierfunktion gegen unberechtigten Zugriff geschützt sind.

In besonders bevorzugter Ausgestaltung der Erfindung ist die Kamera als digitale Kamera ausgebildet, um ein Objekt mittels reflektiertem Licht oder mittels Durchleuchten (bei transparenten Objekten mit Licht oder bei nicht transparenten Objekten mit Röntgenstrahlung) zu inspizieren.

In weiterer Ausgestaltung der Erfindung kann die Mess- und/oder Sensorvorrichtung als Röntgenmess- und/oder -Sensorvorrichtung ausgebildet sein. Die Kamera kann in diesem Fall als Sensor, insbesondere Zeilensensor, ausgebildet sein, der die durch ein zu untersuchendes bzw. inspizierendes Objekt hindurchgehende Röntgenstrahlung direkt oder indirekt (beispielsweise mittels Szintillator) umwandelt. Auf diese Weise kann nicht nur das Äußere (Kontur, Oberflächen, Farbgestaltung, Muster, aufgedruckte oder aufgeklebte Label), sondern auch das Innere von Objekten (Produkten, Verpackungen, etc.) inspiziert werden. Ebenso ist es denkbar die Mess- und/oder Sensorvorrichtung auf Basis der Terahertz-Spektroskopie (auch Submillimeterwellen-, Ferninfrarot- oder far-IR-Spektroskopie genannt), insbesondere die Kamera als Terahertz-Kamers oder Terahertz-Scanner auszubilden.

Die vorstehend in unterschiedlichen Ausgestaltungen erläuterte Erfindung dient vorteilhafterweise nicht nur der Überwachung der Qualität von Kennzeichnungen (IDs, Kennungen, Etiketten, Merkmale, etc.) an Produkten oder Verpackungen sowie der Überwachung und/oder Messung von zulässigen Abmessungen und Inhalten von Objekten, sondern kann auch zu einer besseren oder gar vollständigen, automatisierten Rückverfolgbarkeit (track and trace) von Objekten wie Produkten, Verpackungen bzw. verpackten Produkten beitragen. Insbesondere können Manipulationen erschwert oder gar ausgeschlossen werden. Als geschützte Daten kommen hierbei beispielsweise eindeutige Daten einer Mess- und/oder Sensorvorrichtung wie Seriennummer, prüfpflichtige Daten, Justierdaten, Justiergröße, Justierfaktor, Softwareversion einzeln oder in beliebiger Kombination in Frage.

Im Normalbetrieb (Betriebsmodus) können diese (Steuer-)Daten in nachfolgend erläuterten unterschiedlichen Variationen in die Kamera oder den dort befindlichen ungeschützten Speicher geladen werden, beispielsweise
- vor jedem Start der Mess- und/oder Sensorvorrichtung für den weiteren Betrieb,
- vor jedem Moduswechsel, beispielsweise von einem Bereitschaftsmodus zu einem aktiven (Aufnahme-)Modus,
- nach einer vordefinierten zeitlichen Staffelung oder
- nach einer vordefinierten Anzahl von Aufnahmen.

Für einen sicheren Betrieb können Kamera und Steuerung gegeneinander elektronisch gegen Austausch verriegelt sein.

Insbesondere im Falle einer Kamera ohne eigene Intelligenz, kann vorteilhaft eine elektronische Verriegelung zwischen Kamera und Steuerung benutzt werden. Hierzu werden wichtige Betriebsdaten bzw. Identifizierungsdaten der Kamera in der Steuerung abgespeichert und zu bestimmten Zeitpunkten von der Steuerung gegenkontrolliert oder sicherheitshalber neu in die Kamera geladen. Beispielsweise kann es sich bei diesen Identifizierungsdaten um Typ, Typbezeichnung, Seriennummer, Softwareversion der Kamera handeln.

In dem Justiermodus werden die vorgenannten Identifizierungsdaten der Kamera in die (geschützte) Speichereinrichtung abgelegt.

Weitere vorteilhafte Ausgestaltungen der Erfindung ergeben sich aus den Unteransprüchen.

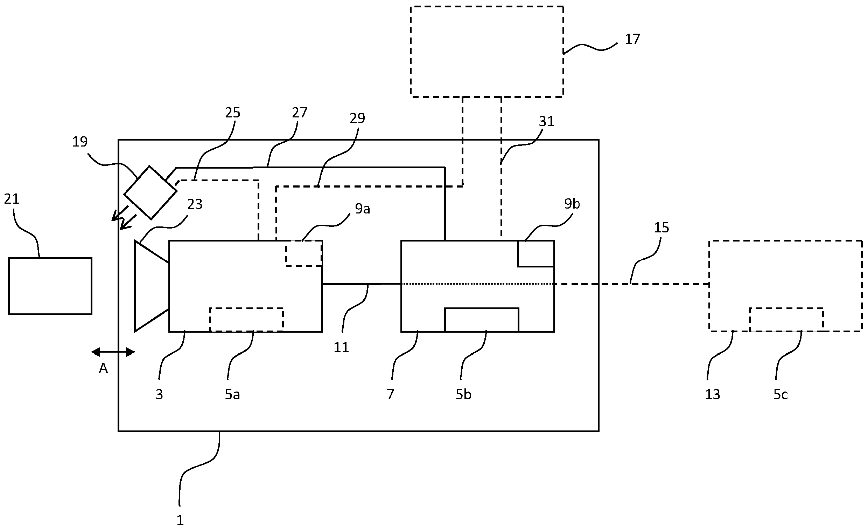

Die Erfindung wird nachfolgend anhand eines in der Zeichnung dargestellten Ausführungsbeispiels näher erläutert.

Die in der Figur schematisch dargestellte erfindungsgemäße Mess- und/oder Sensorvorrichtung 1 besteht in einer ersten Ausführungsform (ohne in der Zeichnung gestrichelt dargestellte Elemente) aus einer Kamera 3 und einer Steuereinrichtung 7, die über eine Kommunikationsverbindung 11 unidirektional (in Richtung der Kamera 3) oder bidirektional in Verbindung stehen. Die Kommunikationsverbindung 11 kann wie alle weiteren Kommunikationsverbindungen festverdrahtet oder drahtlos, insbesondere per verschlüsselter Kommunikation, realisiert sein.

Weiterhin umfasst die Mess- und/oder Sensorvorrichtung 1 eine Beleuchtungseinrichtung in Form einer Beleuchtungseinheit 19 zur ausreichenden Ausleuchtung eines zu inspizierenden Objekts 21. Das Objekt 21 steht exemplarisch für eine Vielzahl von Objekten eines Warenstroms, der von der Mess- und/oder Sensorvorrichtung 1 in hoher Geschwindigkeit inspiziert werden soll. Objekte 21 werden hierbei als Warenstrom nacheinander in einem festen Abstand A zur Kamera 3 bzw. zu deren Objektiv 23 (sofern vorhanden) vorbeigeführt.

Zur Inspektion eines Objekts 21 wird die Kamera 3 über Kommunikationsverbindungen 11 sowie die Beleuchtungseinheit 19 (ebenfalls uni- oder bidirektional) über Kommunikationsverbindungen 27 angesteuert, um Bilddaten des Objekts zu erhalten.

Die Steuereinheit 7 weist eine Speichereinheit 5b und eine Schutzvorrichtung in Form eines Schalters, insbesondere eines mechanischen Schalters 9b, auf, die vorzugsweise innerhalb eines gegen unbefugtes Öffnen geschützten Gehäuses ausgebildet sind. Der Schutz gegen unbefugtes Öffnen kann beispielsweise durch Verplombung oder Versiegelung des Gehäuses erfolgen.

Der Schalter 9b ist hierbei zwar von außen betätigbar (Schieber, Hebel, etc.), jedoch auch in diesem Bereich durch ein Siegel gegen ein unbefugtes Betätigen geschützt. Die elektrischen Kontakte des Schalters liegen vorzugsweise im Inneren des Gehäuses der Steuereinrichtung 7, so dass sie von außen nicht zugänglich sind.

In der Speichereinheit 5b sind die Daten abgelegt, mittels welcher die Kamera 3 und vorzugsweise zusätzlich die Beleuchtungseinheit 19 zur Einhaltung vorgegebener Parameter (Daten zur Justage der Kamera 3, wie Blende, Brennweite, Weißabgleich, ISO, Abstand A zwischen Kamera 3 und Objekt 21 und die Belichtungszeit etc. und/oder Daten zur Justage einer Beleuchtungseinrichtung, wie Helligkeit, Farbe, etc.) justiert wurden.

Die entsprechenden Daten bzw. Einstellungen und Parameter sind daher gegen eine unbefugte Veränderung geschützt, da vorgenannte Siegel nicht zerstörungsfrei gebrochen werden können.

Wird bei einer intervallartigen oder auch permanenten Prüfung (Kalibrierung) der Mess- und/oder Sensorvorrichtung 1 ein Abweichen von den vorgegebenen Parametern festgestellt, kann die erfindungsgemäße Mess- und/oder Sensorvorrichtung 1 von befugtem Personal neu justiert bzw. nachjustiert werden. Hierzu wird das Siegel des Schalters 9b gebrochen und eine Neujustierung, insbesondere eine Nachjustierung, zum Beseitigen einer Messabweichung , durch Veränderung der Justage vorgenommen, bis die Mess- und/oder Sensorvorrichtung 1 wieder die, beispielsweise prüfpflichtigen, Vorgaben erfüllt.

Hierzu wird beispielsweise mittels der Steuereinrichtung 1 eine ansonsten gesperrte Justierfunktion freigegeben und die Kamera 3 und/oder die Beleuchtungseinheit 19 justiert. Das Sperren und Freigeben der Justierfunktion bzw. des Justiermodus kann ebenfalls über die Hard- oder Softwareimplementierte Schutzvorrichtung für die Speichereinheit, beispielsweise über Schalter 9a, 9b, oder über eine nicht dargestellte separat ausgebildete Schutzvorrichtung (ebenfalls Hardware- oder Softwareimplementiert) erfolgen.

Zur Justage der Kamera 3 und/oder Beleuchtungseinheit 19 werden mittels eines Prüfnormals (eingangsseitig) und entsprechender über die Steuereinrichtung 7 vorgenommene Einstellung bzw. Änderung der Justage der Kamera 3 und/oder Beleuchtungseinheit 19 ausgangsseitig Bilddaten erzeugt, die innerhalb einer gewünschten Toleranz liegen sollen. Die entsprechenden Einstellungen der Justage werden dann als neue Justierdaten mittels der entsprechend ausgebildeten Steuereinrichtung 7 in der Speichereinheit 5a, 5b, 5c abgelegt. Beim Verlassen des Justiermodus wird die Schutzeinrichtung wieder aktiviert, so dass die Justierdaten gegen unberechtigten Zugriff geschützt sind.

Als Justierdaten kommen neben den vorstehend erläuterten Daten zur Justage der Kamera und/oder Daten zur Justage der Beleuchtungseinheit 19, auch Justiergrößen zur Änderung bestehender Größen, insbesondere ein Justierfaktor in Frage.

Nachdem die Justage erfolgreich durchgeführt wurde und die neuen Justierdaten in der Speichereinheit 5b abgelegt sind oder dort abgelegt werden, wird der Schalter 9b wieder neu versiegelt, so dass die neuen Daten wiederum gegen einen unbefugten Eingriff geschützt sind.

In einer zweiten Ausführungsform der Erfindung kann der Schalter als Schalter 9a und die Speichereinheit als Speichereinheit 5a statt in der Steuereinrichtung 7 in der Kamera 3 bzw. innerhalb deren Gehäuse ausgebildet sein. Der Schutz gegen einen unbefugten Eingriff erfolgt auch hier in entsprechender Weise, wie er vorstehend anhand der ersten Ausführungsform erläutert wurde. Zur Steuerung der Kamera 3 und der Beleuchtungseinheit 19 kann wie bei der ersten Ausführungsform eine separate Steuereinrichtung 7 vorgesehen sein. Diese Steuereinrichtung 7 kann selbstverständlich auch teilweise oder vollständig in der Kamera 3 integriert sein bzw. innerhalb des Gehäuses der Kamera 3 ausgebildet sein.

In einer dritten Ausführungsform ist die Speichereinheit als Speicher 17 in einem Netzwerk oder einer Cloud ausgebildet. Dort ist der Speicher 17 mittels einer softwareimplementierten Schutzvorrichtung gegen eine unbefugte Veränderung der darin abgelegten Daten geschützt sein. Beispielsweise sind die Daten verschlüsselt, wobei zur Veränderung der Daten der entsprechende geheime Schlüssel angewendet werden muss. Bevorzugt kann alternativ oder zusätzlich auch eine Authentifizierung für einen Schreibzugriff auf den Speicher 17 gefordert sein. Selbstverständlich kann auch in dieser Ausführungsform die Steuereinrichtung 7 separat oder teilweise oder vollständig in der Kamera 3 integriert ausgebildet sein. Die Kommunikation zwischen Speicher 17 und Steuereinrichtung 7 erfolgt dann über eine vorzugsweise bidirektionale Kommunikationsverbindung 31 oder alternativ zwischen Speicher 17 und Kamera 3 über eine Kommunikationsverbindung 29.

In der vierten Ausführungsform ist statt der Steuereinrichtung 7 oder zusätzlich zu dieser Steuereinrichtung 7 ein Bedienterminal 13, beispielsweise ein Personal Computer, vorgesehen. Falls in dieser Ausführungsform die geschützte Speichereinheit 5a oder 5b in der Kamera 3 oder in der Steuereinrichtung 7 oder als Speicher 17 im Netzwerk oder der Cloud ausgebildet ist, dient das Bedienterminal 13 einer komfortablen Bedienung der Mess- und/oder Sensorvorrichtung 1. Die Kommunikation zwischen Bedienterminal 13 und Steuereinrichtung 7 oder zwischen Bedienterminal 13 und Kamera 3 (weitergeführte gepunktete Linie durch die Steuereinrichtung 7) erfolgt über eine Kommunikationsverbindung 15, die gegen Manipulation mittels Versiegelung und/oder verschlüsseltem Datenzugriff und/oder Authentifizierung geschützt ist. Allerdings ist es anstelle der vorstehend beschriebenen Varianten auch möglich, die Speichereinheit als Speichereinheit 5c in dem Bedienterminal auszubilden und dort in entsprechender Weise, wie vorstehend für die Speichereinheiten 5a und 5b beschrieben, gegen einen unbefugten Eingriff zu schützen.

Abschließend sei nochmals darauf hingewiesen, dass die erfindungsgemäße Vorrichtung nicht nur auf Kameras bzw. Inspektionsvorrichtungen zur Erkennung von optischen Codes beschränkt ist, sondern sich in gleicher Weise auch für andere optische Erkennungsaufgaben bzw. -vorrichtungen anwenden lässt. Beispielsweise kann mit der Erfindung auch eine Kamera bzw. Inspektionsvorrichtung zur Erkennung von optischen Strukturen bei der Prüfung der optischen Beschaffenheit von Bauteilen oder eine Kamera bzw. Inspektionsvorrichtung zur Prüfung der Vollständigkeit der Bestückung von Leiterplatten geprüft und/oder justiert werden. Auch für Kameras in anderen Anwendungen, beispielsweise Kameras für KFZ-Anwendungen (Kameras für Spurassistenten sowie Kameras für autonomes Fahren, Verkehrszeichenerkennung, etc.) kann die Erfindung zur Anwendung kommen, beispielsweise im Rahmen von turnusmäßigen Prüfungen.

### Bezugszeichenliste

- 1: Mess- und/oder Sensorvorrichtung
- 3: Kamera
- 5a: Speichereinheit in der Kamera
- 5b: Speichereinheit in der Steuereinrichtung
- 5c: Speichereinheit in dem Bedienterminal
- 7: Steuereinrichtung
- 9a: Schalter in der Kamera
- 9b: Schalter in der Steuereinrichtung
- 11: Kommunikationsverbindung zwischen Kamera und Steuereinheit
- 13: Bedienterminal
- 15: Kommunikationsverbindung
- 17: Speicher in Netzwerk oder Cloud
- 19: Beleuchtungseinheit
- 21: Objekt
- 23: Objektiv/Linse
- 25: Kommunikationsverbindung zwischen Kamera und Beleuchtung
- 27: Kommunikationsverbindung zwischen Steuereinrichtung und Beleuchtung
- 29: Kommunikationsverbindung zwischen Kamera und Speicher in Netzwerk oder Cloud
- 31: Kommunikationsverbindung zwischen Steuereinrichtung und Speicher in Netzwerk oder Cloud
- A: Abstand zwischen Objekt und Kamera bzw. dessen Objektiv/Linse

## Patentansprüche

1. Mess- und/oder Sensorvorrichtung, mit einer Kamera (3) und einer Speichereinheit (5a, 5b, 5c, 17), sowie in der Speichereinheit (5a, 5b, 5c, 17) abgelegten Daten zur Steuerung der Mess- und/oder Sensorvorrichtung (1),
**dadurch gekennzeichnet, dass**
die Mess- und/oder Sensorvorrichtung (1) eine Schutzvorrichtung (9a, 9b) für die Speichereinheit (5a, 5b, 5c, 17) in Form einer mechanischen, elektronischen oder softwareimplementierten Zugriffssperre aufweist, welche die in der Speichereinheit (5a, 5b, 5c, 17) abgelegten Daten gegen unbefugte Veränderung schützt,
wobei die Schutzvorrichtung derart ausgebildet ist, einen erfolgten unbefugten Zugriff aufzudecken und
es sich bei den in der Speichereinheit (5a, 5b, 5c, 17) abgelegten Daten zur Steuerung um Justierdaten zur Justage der Mess- und/oder Sensorvorrichtung (1) handelt.

2. Mess- und/oder Sensorvorrichtung nach Anspruch 1, **dadurch gekennzeichnet, dass** die Mess- und/oder Sensorvorrichtung (1) einen Betriebsmodus aufweist, in welchem die Schutzvorrichtung aktiv ist.

3. Mess- und/oder Sensorvorrichtung nach Anspruch 1 oder 2, **dadurch gekennzeichnet, dass** die Mess- und/oder Sensorvorrichtung (1) einen Justiermodus aufweist, in welchem die Schutzvorrichtung (9a, 9b) deaktiviert ist, um eine Justage der Mess- und/oder Sensorvorrichtung (1) durchzuführen und die dabei ermittelten Justierdaten in die Speichereinheit (5a, 5b, 5c, 17) abzulegen.

4. Mess- und/oder Sensorvorrichtung nach einem der vorhergehenden Ansprüche, **dadurch gekennzeichnet, dass** die Schutzvorrichtung (9a, 9b) als mechanische, elektronische oder softwareimplementierte Zugriffssperre ausgebildet ist, welche die in der Speichereinheit (5a, 5b, 5c, 17) abgelegten Daten gegen einen Schreibzugriff schützt.

5. Mess- und/oder Sensorvorrichtung nach einem der vorhergehenden Ansprüche, **dadurch gekennzeichnet, dass** die Kamera (3) als digitale Kamera ausgebildet ist.

6. Mess- und/oder Sensorvorrichtung nach einem der vorhergehenden Ansprüche, **dadurch gekennzeichnet, dass** die Mess- und/oder Sensorvorrichtung (1) als RöntgenMess- und/oder Sensorvorrichtung ausgebildet ist.

7. Mess- und/oder Sensorvorrichtung nach einem der vorhergehenden Ansprüche, **dadurch gekennzeichnet, dass** die Mess- und/oder Sensorvorrichtung (1) eine Steuereinrichtung (7) aufweist, wobei die Steuereinrichtung (7) den Zugriff auf die Speichereinheit (5a, 5b, 5c, 17) steuert und die Steuereinrichtung (7) als Schutzvorrichtung (9b) ausgebildet ist.

## Claims

1. Measuring and/or sensor device, comprising a camera (3) and a memory unit (5a, 5b, 5c, 17), as well as data stored in the memory unit (5a, 5b, 5c, 17) for controlling the measuring and/or sensor device (1),
**characterized in that**
the measuring and/or sensor device (1) has a protective device (9a, 9b) for the memory unit (5a, 5b, 5c, 17) in the form of a mechanical, electronic or software-implemented access lock which protects the data stored in the memory unit (5a, 5b, 5c, 17) against unauthorized modification,
the protective device being designed to detect any unauthorized access, and
the control data stored in the memory unit (5a, 5b, 5c, 17) being adjustment data for adjusting the measuring and/or sensor device (1).

2. Measuring and/or sensor device according to claim 1, **characterized in that** the measuring and/or sensor device (1) has an operating mode in which the protective device is active.

3. Measuring and/or sensor device according to either claim 1 or claim 2, **characterized in that** the measuring and/or sensor device (1) has an adjustment mode in which the protective device (9a, 9b) is deactivated in order to carry out an adjustment of the measuring and/or sensor device (1) and to store the adjustment data determined thereby in the memory unit (5a, 5b, 5c, 17).

4. Measuring and/or sensor device according to any of the preceding claims, **characterized in that** the protective device (9a, 9b) is designed as a mechanical, electronic or software-implemented access lock which protects the data stored in the memory unit (5a, 5b, 5c, 17) against write access.

5. Measuring and/or sensor device according to any of the preceding claims, **characterized in that** the camera (3) is designed as a digital camera.

6. Measuring and/or sensor device according to any of the preceding claims, **characterized in that** the measuring and/or sensor device (1) is designed as an X-ray measuring and/or sensor device.

7. Measuring and/or sensor device according to any of the preceding claims, **characterized in that** the measuring and/or sensor device (1) has a control device (7), the control device (7) controlling access to the memory unit (5a, 5b, 5c, 17) and the control device (7) being designed as a protective device (9b).

## Revendications

1. Dispositif de mesure et/ou de détection, comportant une caméra (3) et une unité mémoire (5a, 5b, 5c, 17), ainsi que des données stockées dans l'unité mémoire (5a, 5b, 5c, 17) pour la commande du dispositif de mesure et/ou de détection (1), **caractérisé en ce que**
le dispositif de mesure et/ou de détection (1) présente, pour l'unité mémoire (5a, 5b, 5c, 17), un dispositif de protection (9a, 9b) sous la forme d'un blocage d'accès mécanique, électronique ou mis en œuvre par un logiciel, lequel blocage d'accès protège les données stockées dans l'unité mémoire (5a, 5b, 5c, 17) contre toute modification non autorisée,
dans lequel le dispositif de protection est conçu de manière à détecter tout accès non autorisé réalisé, et
les données de commande stockées dans l'unité mémoire (5a, 5b, 5c, 17) pour la commande sont des données d'ajustement pour l'ajustement du dispositif de mesure et/ou de détection (1).

2. Dispositif de mesure et/ou de détection selon la revendication 1, **caractérisé en ce que** le dispositif de mesure et/ou de détection (1) présente un mode de fonctionnement dans lequel le dispositif de protection est actif.

3. Dispositif de mesure et/ou de détection selon la revendication 1 ou 2, **caractérisé en ce que** le dispositif de mesure et/ou de détection (1) présente un mode d'ajustement dans lequel le dispositif de protection (9a, 9b) est désactivé afin que soient effectués un ajustement du dispositif de mesure et/ou de détection (1) et le stockage des données d'ajustement ainsi déterminées dans l'unité mémoire (5a, 5b, 5c, 17).

4. Dispositif de mesure et/ou de détection selon l'une des revendications précédentes, **caractérisé en ce que** le dispositif de protection (9a, 9b) est conçu sous la forme d'un blocage d'accès mécanique, électronique ou mis en œuvre par un logiciel, qui protège les données stockées dans l'unité mémoire (5a, 5b, 5c, 17) contre un accès en écriture.

5. Dispositif de mesure et/ou de détection selon l'une des revendications précédentes, **caractérisé en ce que** la caméra (3) est conçue comme une caméra numérique.

6. Dispositif de mesure et/ou de détection selon l'une des revendications précédentes, **caractérisé en ce que** le dispositif de mesure et/ou de détection (1) est conçu comme un dispositif de mesure et/ou de détection de rayons X.

7. Dispositif de mesure et/ou de détection selon l'une des revendications précédentes, **caractérisé en ce que** le dispositif de mesure et/ou de détection (1) présente un dispositif de commande (7), dans lequel le dispositif de commande (7) commande l'accès à l'unité mémoire (5a, 5b, 5c, 17) et le dispositif de commande (7) est conçu comme un dispositif de protection (9b).
